# EUROPEAN PATENT SPECIFICATION

(11) **EP 3 437 901 B1**
(45) Date of publication and mention of the grant of the patent: **13.05.2020**
(21) Application number: 17184495.4
(22) Date of filing: 02.08.2017
(51) Int. Cl.: B60C 25/13, B60C 25/132

(54) **BEAD BREAKER DEVICE**
REIFENABDRÜCKVORRICHTUNG
DISPOSITIF DÉMONTE-TALONS

(43) Date of publication of application: 06.02.2019
(73) Proprietor: Beissbarth GmbH, 80993 München (DE)
(72) Inventor: Bartoli, Pietro, 42015 Correggio (RE) (IT)
(74) Representative: Schmitt-Nilson Schraud Waibel Wohlfrom Patentanwälte Partnerschaft mbB

(56) References cited:
- EP-A1- 0 015 102
- EP-A1- 1 524 134
- JP-U- S55 176 807

## Description

The invention relates to a bead breaker device for removing a tyre from a rim of a wheel.

### State of the Art

Bead breaker devices comprising a pivotable bead breaker arm for removing a tyre from a rim of a wheel are known in the art. These bead breaker devices, however, are not well suited for all kinds of wheels. Their performance depends on the width of the wheel and they are usually not optimal for removing tyres from very big/wide or small/narrow rims.

According to US 6 932 137 B1 a tire bead breaking tool for removing a tire from a tire wheel rim includes an elongated support, which is positionable across the diameter of the tire. First and second clamps are coupled to the elongated support for securing the tire bead breaking tool to the wheel rim. The elongated support is attached to a first and second bracket. A lever arm is removably coupled to the first bracket and provides force against a bead breaker foot, which contacts the tire. The bead breaker foot is positioned at a 10 degree angle and extends between the first and second clamps for facilitating breaking of the bead of the tire. The second clamp is threadedly attached to the tire bead breaking tool for adjustment of the second clamp with respect to the first clamp for using the bead breaking tool for various sized tires.

EP 1 524 134 A1 discloses a bead release device for tire removal machines comprising: a movable arm having a first end removably associated with a base; a positionable bead release tool associated with a second end of the arm distant from said first end, to release the tire bead of a wheel resting on a support surface; manipulator means for moving said arm within a plane of swivel of the arm lying perpendicular to the base; said first end of the arm being associated with the base by means of a locking and release system enabling said first end of the arm to undergo movement, said movement rotating said plane of swivel of the arm about an axis of rotation lying within said plane of swivel and positioned substantially perpendicular to said base.

EP 0 015 102 A1 discloses a bead breaker mechanism for a tire changer machine, said bead breaker mechanism being adapted to break a tire's bead away from a rim's bead seat when said rim and tire are positioned on said machine's table. Said mechanism comprises
a bead breaker blade which moves in a generally linear and radially inward direction toward the rim's center plane during use from a set up position in contact with said rim's flange where said blade rests on a tire's bead area to a maximum extension position where said blade's working face is entirely located radiall inward of said rim's flange. Said generally linear radially inward path is reproduceable time after time upon repeated operation of said bead breaker mechanism with different diameter rims without directly connecting said bead breaker blade to said rim's flange. Said bead breaker blade is movable between a use position where it can be set upon a tire disposed on said machine's table and a storage position where said table is accessible for changing the tires thereon. The bead breaker mechanism further comprises a power unit connected with said blade for moving said blade through said controlled path against the resistance provided by the tire.

### Disclosure of the Invention

It is an object of the invention to provide an improved bead breaker device, in particular a bead breaker device which is more effective in removing big/wide and small/narrow tyres.

According to an exemplary embodiment of the invention, a bead breaker device for removing a tyre from a rim of a wheel comprises a support structure, a rotatable reception or hub, which is configured to receive a rim of wheel so that the wheel is rotatable around a rotational axis which is coaxial with the axis of the wheel; and a bead breaker arm which is pivotably fixed to the support structure by means of a first joint. Said first joint being supported by a carriage, which is linearly movably mounted to the support structure so that the first joint slidable in a direction which is parallel to the rotational axis. The bead breaker device further comprises a second joint pivotably connecting an actuation rod to the bead breaker arm and an actuator configured for moving the actuation rod in order to move the bead breaker arm between its closed position and an open position. Allowing a linear movement of the first joint with respect to the support structure adds an additional degree of freedom to the bead breaker arm providing more flexibility. Said additional flexibility allows adjusting the bead breaker arm better to different kinds of wheels, in particular to different sizes and shapes of wheels, tyres and/or rims.

According to an embodiment of the invention, the bead breaker device has a first end and an opposing second end, and the bead breaker arm is pivotable between a closed position, in which the second end of the bead breaker arm is arranged close to the support structure, and an open position, in which the second end of the bead breaker arm is arranged in more distance from the support structure.

The open position of the bead breaker arm allows mounting/ dismounting a wheel to/from the bead breaker device.

When arranged in the closed position, the bead breaker arm is in a position close to the wheel in order to remove the tyre from the rim.

According to an embodiment, linear movement of the first joint allows modifying the distance between the second end of the bead breaker arm and the support structure in the open and/or in the closed position of the bead breaker arm. This allows adjusting the position of the bead breaker arm to different sizes, in particular to different widths, of the rim.

According to an embodiment, the bead breaker arm comprises a bead breaker pad which is provided at the second end of the bead breaker arm and which is configured for interacting with the tyre in order to remove the tyre from the rim. A bead breaker pad allows removing the tyre from the rim conveniently, reliably and securely without damaging the tyre and/or the rim.

According to an embodiment, a linear movement of the first joint allows adjusting the angle between the bead breaker pad and the wheel. Adjusting the angle between the bead breaker pad and the wheel allows optimising the orientation of the bead breaker pad with respect to the wheel in order to remove the tyre from the rim most efficiently without causing damage to the tyre and/or to the rim.

In the following an exemplary embodiment of the invention is described with respect to the enclosed figures.

### Description of the Figures

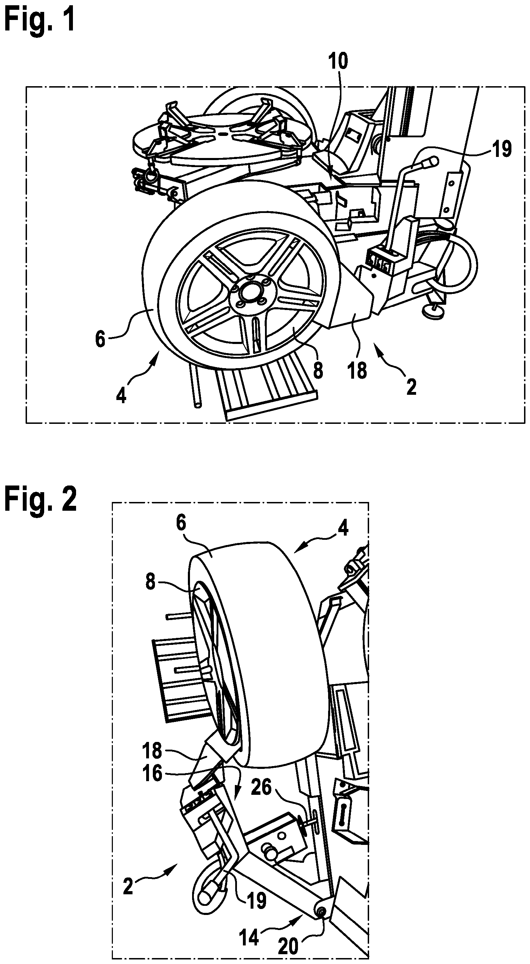

Figure 1 shows a perspective front view of a bead breaker device 2 according to an exemplary embodiment of the invention together with a wheel 4.
Figure 2 shows a perspective view of the bead breaker device 2 from the top.
Figure 3 shows a perspective partial view of the functional parts of a bead breaker device 2 according to an embodiment of the invention
   including the bead breaker arm 12, and Figures 4 to 7 depict top views respectively corresponding to a different configuration / orientation of the bead breaker arm 12. For reasons of clarity, the wheel 4 is not shown in Figures 3 to 7.

The bead breaker device 2 comprises a support structure 10 supporting a rotatable reception or hub, which is not visible in the figures. The reception or hub is configured for receiving and supporting a rim 8 of a wheel 4. The reception or hub is rotatable so that the wheel 4, when mounted to the reception or hub, is rotatable around a rotational axis, which is coaxial with the axis of the wheel 4. In the embodiment shown in the figures the rotational axis is oriented horizontally.

A bead breaker arm 12 comprises a first arm portion 13 including a first end 14 and a second arm portion 15 including an opposing second 16. The first and second arm portions 13, 15 are connected to each other at an obtuse angle, e.g. at an angle of 140° to 160°, in particular at an angle of 150°.

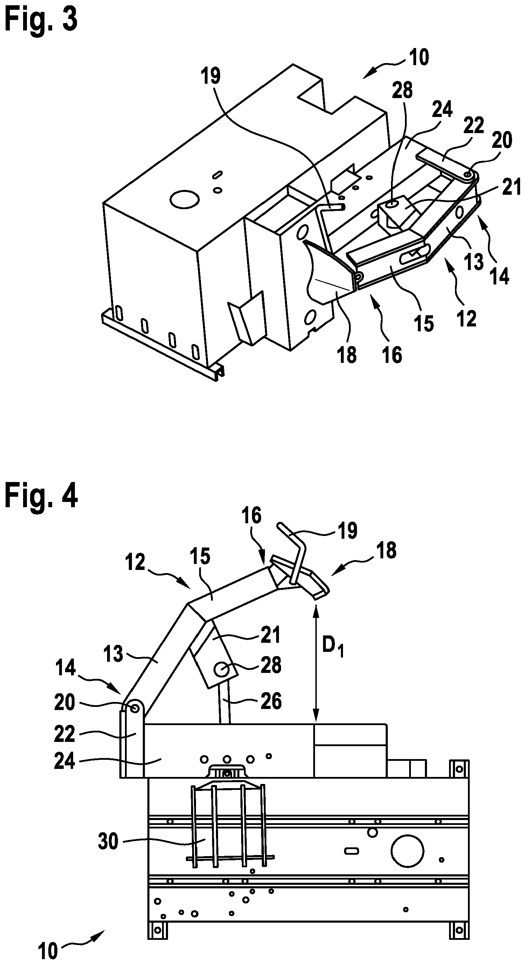

The first end 14 is mounted to a rod 24 of the support structure 10 by means of a first joint 20 so that it is rotatable around a vertical axis, i.e. an axis which is oriented orthogonally with respect to the plane of Figures 4 to 7.

The first joint 20 is supported by a carriage 22, which is slidably mounted to the rod 24. The slidable carriage 22 allows the first joint 20 to move linearly in a direction, which is oriented basically parallel to the rotational axis. As a result, the distance of the first joint 20 from the support structure 10 may be adjusted by moving the carriage 22 along the rod 24 in a direction, which is oriented basically parallel to the rotational axis.

A bead breaker pad 18 is mounted to the second end 16 of the bead breaker arm 12. The bead breaker pad 18 is configured to interact with the wheel 4 in order to separate the tyre 6 from the rim 8 of the wheel 4.

The bead breaker pad 18 comprises a handle 19, which allows for a manual movement of the bead breaker pad 18.

The bead breaker arm 12 further comprises a third arm portion 21 extending from the first arm portion 13 towards the support structure 10. The third arm portion 21 in particular may extend basically at an angle of 90° with respect to the second arm portion 15.

A second joint 28 is provided at a distal end of the third arm portion 21 facing towards the support structure 10. An actuating rod 26 is pivotably connected to the third arm portion 21 by means of the second joint 28.

An opposing end of the actuating rod 26 facing away from the bead breaker arm 12 interacts with an actuator 30 provided within or at the support structure 10. This configuration allows the actuator 30 to move the bead breaker arm 12 by actuating the actuating rod 26.

The actuator 30 may be an electromagnetic, pneumatic or hydraulic actuator 30.

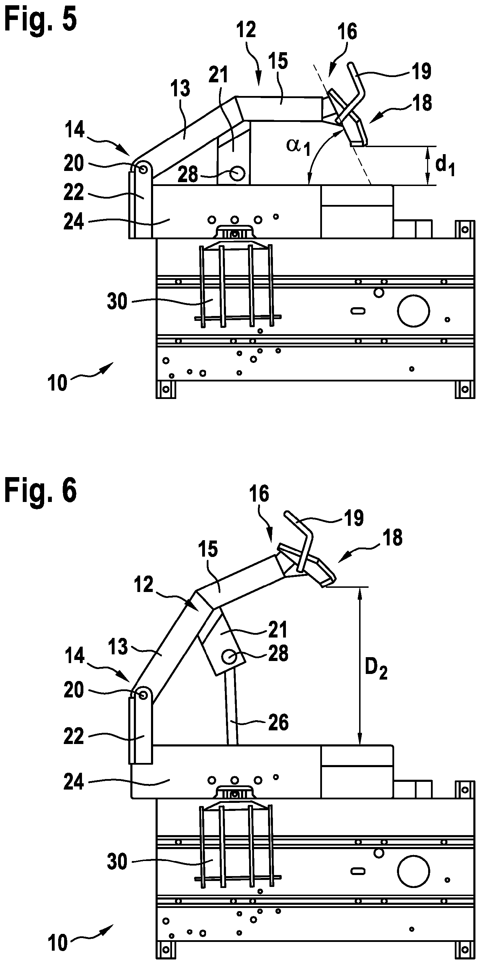

Figures 4 and 5 depict a first configuration, in which the carriage 22 is arranged in a first position, in which the first joint 20 is arranged close to support structure 10.

In Figure 4, the bead breaker arm 12 is pivoted into an "open position", in which the second end 14 of the breaker arm 12 supporting the bead breaker pad 18 is arranged in a large distance D₁ from the support structure 10. This position allows mounting/dismounting a wheel 4 (not shown in Figs. 4 to 7) to/from the reception/hub.

In Figure 5, the bead breaker arm 12 is pivoted into a "closed position", in which the second end 14 of the breaker arm 12 supporting the bead breaker pad 18 is arranged in a small distance d₁ from the support structure 10.

The minimum distance d₁ between the tip of the bead breaker pad 18 and the support structure 10 may be e.g. 60 mm.

In this position, the bead breaker pad 18 interacts with a wheel 4 (not shown in Figs. 4 to 7) mounted to the reception/hub in order to separate the tyre 6 from the rim 8 of the wheel 4. In this position, the bead breaker pad 18 is oriented in an angle α₁ with respect to the front face of the support structure 10, which is parallel to the plane of rotation of the wheel 4.

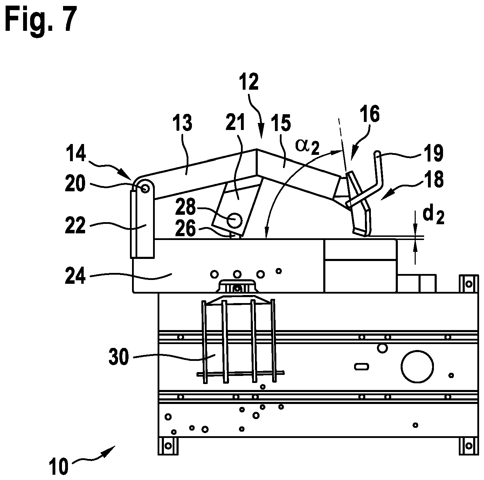

Figures 6 and 7 depict a second configuration, in which the carriage 22 is in a second, extended position, in which the first joint 20 is arranged in a larger distance form the support structure 10 than in the first position.

In Figure 6, the bead breaker arm 12 is pivoted into an "open position", in which the second end 14 of the breaker arm 12 supporting the bead breaker pad 18 is arranged in a larger distance D₂ from the support structure 10. This position allows mounting/dismounting a wheel 4 (not shown in Figure 4) to/from the reception. The distance D₂ is larger than the distance D₁ in the configuration shown in Figure 4. Thus, in this configuration, wider wheels 4 may be mounted to the reception.

In Figure 7, the bead breaker arm 12 is pivoted into a "closed position", in which the second end 14 of the breaker arm 12 supporting the bead breaker pad 18 is arranged in a small distance d₂ from the support structure 10. In this position, the bead breaker pad 18 interacts with a wheel 4 (not shown) mounted to the reception/hub in order to separate the tyre 6 from the rim 8 of the wheel 4.

Due to the extended position of the carriage 22, in this configuration the distance d₂ is smaller than the distance d₁ in the configuration shown in Figure 5. The minimum distance d₂ between the tip of the breaker pad 18 and the support structure 10 may be reduced to e.g. 10 mm. The distance d₂ even may be zero.

Additionally, the orientation of the bead breaker pad 18 with respect to the front face of the support structure 10 may change to a larger angle α₂.

The reduction of the minimum distance d_{1/2} and the change of the angle α_{1/2} increase the performance penetration of the bead breaker pad 18 into the gap between the rim 8 and the tyre 6.

This enhances the performance of the bead breaker arm 12 in particular for small or wet tyres 6 and special shapes of the rim 8. It further reduced the risk of damaging sensors (TMPS) provided inside the tyre 6.

## Claims

1. Bead breaker device (2) for removing a tyre (8) from a rim (6) of a wheel (4), the bead breaker device (2) comprising:
a support structure (10);
a rotatable reception or hub, which is configured to receive a rim (6) of wheel (4) so that the wheel (4) is rotatable around a rotational axis which is coaxial with the axis of the wheel (4);
a bead breaker arm (12) which is pivotably fixed to the support structure (10) by a first joint (20); said first joint (20) being supported by a carriage (22), which is linearly movably mounted to the support structure (10) so that the joint (20) slidable in a direction which is parallel to the rotational axis;
wherein said bead breaker device (2) further comprises a second joint (28) pivotably connecting an actuation rod (26) to the bead breaker arm (12), and an actuator (30) configured for moving the actuation rod (26) in order to move the bead breaker arm (12) between its closed position and an open position.

2. Bead breaker device (2) according to claim 1 having a first end (14) and an opposing second end (16), wherein the bead breaker arm (12) is pivotable between a closed position, in which the second end (16) of the bead breaker arm (12) is arranged in a position close to the support structure (10), and an open position, in which the second end (16) of the bead breaker arm (12) is arranged in a larger distance from the support structure (10).

3. Bead breaker device (2) according to claim 2, wherein a linear movement of the joint (20) allows modifying the distance (D₁, D₂) between the second end (16) of the bead breaker arm (12) and the support structure (10) in its open position.

4. Bead breaker device (2) according to claim 2 or 3, wherein a linear movement of the joint (20) allows modifying the distance (d₁, d₂) between the second end (16) of the bead breaker arm (12) and the support structure (10) in its closed position.

5. Bead breaker device (2) according to any of the previous claims, further comprising a bead breaker pad (18), which is provided at the second end (16) of the bead breaker arm (12) and which is configured for interacting with the wheel (4) in order to remove the tyre (8) from the rim (6).

6. Bead breaker device (2) according to claim 5, wherein a linear movement of the joint (20) allows modifying an angle (α) between the bead breaker pad (18) and the wheel (4).

## Patentansprüche

1. Reifenabdrückvorrichtung (2) zum Entfernen eines Reifens (8) von einer Felge (6) eines Rads (4),
wobei die Reifenabdrückvorrichtung (2) aufweist:
eine Stützstruktur (10);
eine drehbare Aufnahme oder Nabe, die zum derartigen Aufnehmen einer Felge (6) eines Rads (4) ausgebildet ist, dass das Rad (4) um eine Rotati - onsachse drehbar ist, die koaxial mit der Achse des Rads (4) ist,
einen Wulstabdrückarm (12), der durch ein erstes Gelenk (20) an der Stütz - struktur (10) schwenkbar befestigt ist;
wobei das erste Gelenk (20) von einem an der Stützstruktur (10) linear be - weglich angebrachten Schlitten (22) derart abgestützt ist, dass das Gelenk (20) in einer zu der Rotationsachse parallelen Richtung verschiebbar ist;
wobei die Reifenabdrückvorrichtung (2) ferner ein zweites Gelenk (28) auf - weist, das eine Betätigungsstange (26) mit dem Wulstabdrückarm (12) schwenkbar verbindet, sowie einen Aktuator (30) aufweist, der zum Bewe - gen der Betätigungsstange (26) ausgebildet ist, um dadurch den Wulstab - drückarm (12) zwischen seiner geschlossen Position und einer offenen Po - sition zu bewegen.

2. Reifenabdrückvorrichtung (2) nach Anspruch 1,
die ein erstes Ende (14) und ein gegenüberliegendes zweites Ende (16) aufweist, wobei der Wulstabdrückarm (12) schwenkbar ist zwischen einer geschlossenen Position, in der das zweite Ende (16) des Wulstabdrückarms (12) in einer Position nahe der Stützstruktur (10) angeordnet ist, und einer offenen Position, in der das zweite Ende (16) des Wulstabdrückarms (12) in einem größeren Abstand von der Stützstruktur (10) angeordnet ist.

3. Reifenabdrückvorrichtung (2) nach Anspruch 2,
wobei eine lineare Bewegung des Gelenks (20) das Modifizieren des Ab - stands (D₁, D₂) zwischen dem zweiten Ende (16) des Wulstabdrückarms (12) und der Stützstruktur (10) in seiner offenen Position ermöglicht.

4. Reifenabdrückvorrichtung (2) nach Anspruch 2 oder 3,
wobei eine lineare Bewegung des Gelenks (20) das Modifizieren des Ab - stands (d₁, d₂) zwischen dem zweiten Ende (16) des Wulstabdrückarms (12) und der Stützstruktur (10) in seiner geschlossenen Position ermöglicht.

5. Reifenabdrückvorrichtung (2) nach einem der vorhergehenden Ansprüche, die ferner ein Wulstabdrückkissen (18) aufweist, das an dem zweiten Ende (16) des Wulstabdrückarms (12) vorgesehen ist und das zur Wechselwirkung mit dem Rad (4) ausgebildet ist, um den Reifen (8) von der Felge (6) zu entfernen.

6. Reifenabdrückvorrichtung (2) nach Anspruch 5,
wobei eine lineare Bewegung des Gelenks (20) das Modifizieren eines Win - kels (α) zwischen dem Wulstabdrückkissen (18) und dem Rad (4) ermöglicht.

## Revendications

1. Dispositif démonte-talon (2) permettant de retirer un pneumatique (8) de la jante (6) d'une roue (4), le dispositif démonte-talon (2) comprenant :
une structure de support (10) ;
un élément de réception ou moyeu rotatif configuré de manière à accueillir la jante (6) d'une roue (4) de telle sorte que la roue (4) puisse tourner autour d'un axe de rotation qui est coaxial par rapport à l'axe de la roue (4) ;
un bras de démonte-talon (12) qui est fixé de manière à pouvoir pivoter sur la structure de support (10) par une première jonction (20) ; ladite première jonction (20) étant supportée par une glissière (22) qui est montée de manière linéaire et mobile sur la structure de support (10) de sorte que la jonction (20) puisse coulisser dans une direction qui est parallèle à l'axe rotatif ;
**caractérisé en ce que** ledit dispositif démonte-talon (2) comprend en outre une deuxième jonction (28) raccordant de manière pivotante une tige d'actionnement (26) au bras de démonte-talon (12), et un actionneur (30) configuré de manière à déplacer la tige d'actionnement (26) afin de déplacer le bras de démonte-talon (12) entre sa position fermée et une position ouverte.

2. Le dispositif démonte-talon (2) selon la revendication 1 possédant une première extrémité (14) et une deuxième extrémité opposée (16), **caractérisé en ce que** le bras de démonte-talon (12) peut pivoter entre une position fermée, dans laquelle la deuxième extrémité (16) du bras de démonte-talon (12) est disposée dans une position proche de la structure de support (10), et une position ouverte, dans laquelle la deuxième extrémité (16) du bras de démonte-talon (12) est disposée à une distance plus importante de la structure de support (10).

3. Le dispositif démonte-talon (2) selon la revendication 2, **caractérisé en ce qu'**un mouvement linéaire de la jonction (20) permet de modifier la distance (D1, D2) entre la deuxième extrémité (16) du bras de démonte-talon (12) et la structure de support (10) dans sa position ouverte.

4. Le dispositif démonte-talon (2) selon l'une quelconque des revendications 2 ou 3, **caractérisé en ce qu'**un mouvement linéaire de la jonction (20) permet de modifier la distance (d1, d2) entre la deuxième extrémité (16) du bras de démonte-talon (12) et la structure de support (10) dans sa position fermée.

5. Le dispositif démonte-talon (2) selon l'une quelconque des revendications précédentes, comprenant en outre un patin de démonte-talon (18) qui se trouve à la deuxième extrémité (16) du bras de démonte-talon (12) et qui est configuré de manière à interagir avec la roue (4) en vue de retirer le pneumatique (8) de la jante (6).

6. Le dispositif démonte-talon (2) selon la revendication 5, **caractérisé en ce qu'**un mouvement linéaire de la jonction (20) permet de modifier un angle (a) entre le patin de démonte-talon (18) et la roue (4).
